(19) Europäisches Patentamt

European Patent Office

Office européen des brevets

(11) Veröffentlichungsnummer: **0 382 070 B1**

(12) **EUROPÄISCHE PATENTSCHRIFT**

(45) Veröffentlichungstag der Patentschrift: **20.10.93**

(21) Anmeldenummer: **90101899.4**

(22) Anmeldetag: **31.01.90**

Verbunden mit 90902197.4/0457774
(europäische
Anmeldenummer/Veröffentlichungsnummer)
durch Entscheidung vom 24.01.92.

(51) Int. Cl.⁵: **C09K 7/06**

(54) **Oleophile basische Aminverbindungen als Additiv in Invert-Bohrspülschlämmen.**

(30) Priorität: **09.02.89 DE 3903785**

(43) Veröffentlichungstag der Anmeldung:
**16.08.90 Patentblatt 90/33**

(45) Bekanntmachung des Hinweises auf die
Patenterteilung:
**20.10.93 Patentblatt 93/42**

(84) Benannte Vertragsstaaten:
**AT BE DE DK ES FR GB IT NL**

(56) Entgegenhaltungen:
EP-A- 0 245 157     FR-A- 1 441 299
FR-A- 1 581 186     US-A- 2 946 746
US-A- 3 728 277     US-A- 4 374 737
US-A- 4 631 136

(73) Patentinhaber: **Henkel Kommanditgesellschaft auf Aktien**

**D-40191 Düsseldorf(DE)**

(72) Erfinder: **Müller, Heinz**
**Goldregenweg 4**
**D-4019 Monheim(DE)**
Erfinder: **Herold, Claus-Peter, Dr.**
**Ostpreussenstrasse 26**
**D-4020 Mettmann(DE)**
Erfinder: **Von Tapavicza, Stephan, Dr.**
**Thomas-Mann-Strasse 12**
**D-4006 Erkrath 2(DE)**

## Beschreibung

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Flüssige Spülsysteme zur Niederbringung von Gesteinsbohrungen unter Aufbringen des abgelösten Bohrkleins sind bekanntlich beschänkt eingedickte fließfähige Systeme auf Wasserbasis oder auf Ölbasis. Diese zuletzt genannten Systeme auf Ölbasis finden in der Praxis zunehmende Bedeutung und hier insbesondere im Bereich der off-shore-Bohrungen oder beim Durchteufen wasserempfindlicher Schichten.

Bohrspülungen auf Ölbasis werden im allgemeinen als sogenannte Invert-Emulsionsschlämme eingesetzt, die aus einem Dreiphasensystem bestehen: Öl, Nasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Öl-basierte Bohrspülungen waren zunächst aufgebaut auf Dieselölfraktionen mit einem Gehalt an Aromaten. Zur Entgiftung und Verminderung der damit geschaffenen ökologischen Problematik ist dann vorgeschlagen worden, weitgehend aromatenfreie Kohlenwasserstofffraktionen - heute auch als "nonpolluting oils" bezeichnet - als geschlossene Ölphase einzusetzen - siehe hierzu die zuvor zitierte Literatur. Wenn auf diese Weise auch durch den Ausschluß der aromatischen Verbindungen gewisse Fortschritte erreicht worden sind, so erscheint eine weitere Minderung der Umweltproblematik - ausgelöst durch Bohrspülflüssigkeiten der hier betroffenen Art - dringend erforderlich. Gültigkeit hat das insbesondere beim Niederbringen von off-shore-Bohrungen zur Erschließung von Erdöl- bzw. Erdgasvorkommen, weil das marine Ökosystem besonders empfindlich auf das Einbringen von toxischen und schwer abbaubaren Substanzen reagiert.

Die einschlägige Technologie hat seit einiger Zeit die Bedeutung von Ölphasen auf Esterbasis zur Lösung dieser Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt.

Die der Erfindung zugrunde liegenden Untersuchungen haben gezeigt, daß der im Stand der Technik erwogene Einsatz von leicht abbaubaren Ölen pflanzlichen und/oder tierischen Ursprungs aus praktischen Gründen nicht in Betracht kommen kann. Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

Esteröle der hier betroffenen Art verhalten sich tatsächlich im Einsatz nicht gleich wie die bisher verwendeten Mineralölfraktionen auf reiner Kohlenwasserstoffbasis. Esteröle gleich welcher Konstitution unterliegen im praktischen Einsatz auch und gerade in den W/O-Invert-Bohrspülschlämmen einer partiellen Hydrolyse. Hierdurch werden freie Carbonsäuren gebildet. Diese wiederum reagieren mit den in Bohrspülsystemen der hier betroffenen Art stets vorliegenden alkalischen Bestandteilen - z. B. mit der zum Korrosionsschutz eingesetzten Alkalireserve - zu den entsprechenden Salzen. Salze aus stark hydrophilen Basen und den in Ölen natürlichen Ursprungs überwiegend anzutreffenden Säuren des Bereichs von C 12 bis 24 sind aber bekanntlich Verbindungen mit vergleichsweise hohen HLB-Werten, die insbesondere zur Einstellung und Stabilisierung von O/W-Emulsionen führen. Die Wasch- und Reinigungstechnik macht hiervon bekanntlich in größtem Umfange Gebrauch. Die Bildung auch schon beschränkter Mengen solcher O/W-Emulgatorsysteme muß aber mit den im Sinne der erfindungsgemäßen Zielsetzung geforderten W/O-Emulsionen interferieren und damit zu Störungen führen.

Gegenstand der älteren Anmeldungen EP-A1-374 671 und EP-A1-374 672 ist die Verwendung von Esterölen auf Basis jeweils ausgewählter Monocarbonsäuren bzw. Monocarbonsäuregemische und zugehöriger monofunktioneller Alkohole. Die älteren Anmeldungen schildern, daß mit den dort offenbarten Estern bzw. Estergemischen monofunktioneller Reaktanten nicht nur in der frischen Bohrspülung befriedigende rheologische Eigenschaften eingestellt werden können, sondern daß es auch gelingt, unter Mitverwendung ausgewählter bekannter Alkalireserven in der Bohrspülung zu arbeiten und auf diese Weise unerwünschte Korrosionen zurückzuhalten. Wesentlich ist nach der Lehre dieser älteren Anmeldungen bezüglich der Alkalireserve, daß auf die Mitverwendung von stark hydrophilen Basen wie Alkalihydroxid und/oder Diethanolamin verzichtet wird. Als Alkalireserve wird der Zusatz von Kalk (Calciumhydroxid bzw. lime) und/oder die Mitverwendung von Zinkoxid oder vergleichbaren Zinkverbindungen vorgesehen.

Auch hier ist allerdings eine zusätzliche Einschränkung erforderlich. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 2 lb/bbl Ölspülung angesetzt.

Die Lehre der vorliegenden Erfindung geht demgegenüber von weiterführenden Überlegungen und Erkenntnissen aus, die auf dem Gebiet der hier betroffenen Invert-Bohrspülungen mit geschlossener Ölphase unbekannt sind. Die erfindungsgemäße Lehre berücksichtigt die Tatsache, daß Esteröle enthaltende Bohrspülungen der hier betroffenen Art im praktischen Betrieb der beschränkten partiellen Hydrolyse unterliegen, damit unausweichlich zunehmend freie Carbonsäuren als Hydrolyseprodukt bilden und früher oder später einen kritischen oder doch wenigstens gefährdeten Alterungszustand erreichen, der sich als unerwünschte Verdickung der Bohrspülung ausbildet. Die erfindungsgemäße Lehre geht von dem Konzept aus, in Invert-Bohrspülungen der hier betroffenen Art ein zusätzliches Additiv mitzuverwenden, das geeignet ist, die erwünschten rheologischen Daten der Bohrspülung im geforderten Bereich auch dann zu halten, wenn zunehmend mehr und mehr oder gar exzessive Mengen an freier Carbonsäure durch partielle Esterhydrolyse gebildet werden. Die Lehre der Erfindung will dabei die entstehenden freien Carbonsäuren nicht nur in einer unschädlichen Form abfangen, sondern sie darüber hinaus gewünschtenfalls zu wertvollen Komponenten mit stabilisierenden bzw. emulgierenden Eigenschaften für das Gesamtsystem umwandeln.

Gegenstand der Erfindung ist dementsprechend in einer ersten Ausführungsform die Verwendung von basischen und zur Salzbildung mit Carbonsäuren befähigten Aminverbindungen ausgeprägt oleophiler Natur und beschränkter Wasserlöslichkeit als Additiv in W/O-Invert-Bohrölschlämmen, die in der geschlossenen Ölphase Esteröle aus monofunktionellen Carbonsäuren mit 6 bis 24 C-Atomen und monofunktionellen Alkoholen und zusammen mit der dispersen wäßrigen Phase Emulgatoren, Viskositätsbildner, Beschwerungsmittel, fluid-loss-Additive und gewünschtenfalls weitere Zusatzstoffe enthalten, zum Schutz der Bohrölschlämme gegen unerwünschte Eindickung im Gebrauch und/oder zur Verbesserung ihrer Fließfähigkeit.

Die Erfindung betrifft in einer weiteren Ausführungsform W/O-Invert-Bohrspülungen, die für die off-shore-Erschließung von Erdöl- bzw. Erdgasvorkommen geeignet sind und in einer geschlossenen, Esteröle der genannten Art enthaltenden Ölphase eine disperse wäßrige Phase zusammen mit Emulgatoren, Viskositätsbildnern, Beschwerungsmitteln, fluid-loss-Additiven und gewünschtenfalls weiteren üblichen Zusatzstoffen enthalten, wobei die Erfindung in dieser Ausführungsform dadurch gekennzeichnet ist, daß die Bohrspülungen als zusätzliches Additiv basische und zur Salzbildung mit Carbonsäuren befähigte Aminverbindungen ausgeprägt oleophiler Natur und entsprechend beschränkter Wasserlöslichkeit enthalten. Der Zusatz der erfindungsgemäßen Additive gibt den Bohrspülungen Schutz gegen unerwünschte Eindickung im Gebrauch und ist insgesamt zur Verbesserung ihrer Fließfähigkeit geeignet.

Die Erfindung richtet sich schließlich in einer weiteren Ausführungsform auf Additivgemische, die zum angegebenen Zweck in Esteröle der genannten Art enthaltenden Bohrspülungen geeignet sind und die basischen und zur Salzbildung mit Carbonsäuren befähigten Aminverbindungen ausgeprägt oleophiler Natur und beschränkter Wasserlöslichkeit in einem mit der Ölphase mischbaren Lösungsmittel enthalten. Als Lösungsmittel sind sogenannte nonpolluting oils bevorzugt, wobei besondere Bedeutung hier wiederum den zuvor beschriebenen Esterölen zukommt. In Stoffgemischen der hier zuletzt genannten Art liegen die Alterungsschutzmittel auf Basis der oleophilen basischen Aminverbindungen zweckmäßig in Konzentrationen von wenigstens 20 Gew.-%, bevorzugt in Mengen von wenigstens 50 Gew.-% vor.

Kern der erfindungsgemäßen Lehre in allen ihren Ausführungsformen ist die Erkenntnis, daß die bei dem praktischen Betrieb durch partielle Hydrolyse der Esteröle unausweichlich freiwerdenden Carbonsäuren bei Mitverwendung der erfindungsgemäß definierten Alterungsschutzmittel auf Basis oleophiler basischer Aminverbindungen abgefangen werden, ohne daß es zu einer Störung der rheologischen Eigenschaften des Invert-Schlammes kommen muß. Durch Auswahl geeigneter Aminverbindungen ist es dabei sogar möglich, mittels der jetzt eintretenden Salzbildung in situ wertvolle stabilisierende und/oder emulgierende Mischungsbestandteile zu bilden. Die oleophilen basischen Aminverbindungen können den Bohrspülsystemen von Anfang an zugesetzt sein und/oder sie können ihnen während des Gebrauchs zugesetzt werden.

Es hat sich gezeigt, daß es durch Zusatz bzw. Mitverwendung der erfindungsgemäßen basischen oleophilen Aminverbindungen sogar möglich ist, gealterte und unerwünscht verdickte Bohrspülsysteme der hier betroffenen Art wieder so aufzufrischen, daß ihre Rheologie in den zur Pump- und Fließfähigkeit auch bei tiefen Temperaturen erforderlichen Bereich abgesenkt wird. Im Zusammenhang mit der Verwendung der erfindungsgemäß definierten Additive hat sich eine weitere wichtige Erleichterung in dem Aufbau von W/O-Bohrspülungen gezeigt: Die zur Korrosionsverhinderung erforderliche Alkalisierung der Bohrspülung und insbesondere die Bereitstellung einer hinreichenden Alkalireserve insbesondere gegen den Einbruch saurer Gase wie $CO_2$ und/oder $H_2S$ wird unproblematisch. Die erfindungsgemäß als Zusatzstoffe vorgeschlagenen ausgeprägt oleophilen basischen Aminverbindungen bilden aus sich heraus einen Basizitätspuffer, der als Alkalireserve Verwendung finden kann. Wichtiger ist die überraschende Erkenntnis, daß die Mitverwendung konventioneller Alkalireserven und hier insbesondere die Mitverwendung des besonders preisgünstigen Kalks weitgehend unproblematisch wird, wenn gleichzeitig die erfindungsgemäßen Alterungsschutzadditive in der Bohrspülung vorliegen. Der zuvor erwähnte Grenzwert von 2 lb/bbl (Kalk/Ölspülung) für Spülsysteme auf Basis von Esterölen, der in den genannten älteren Anmeldungen offenbart wird, kann in der Regel bedenkenlos überschritten werden, wenn die ausgeprägt oleophilen basischen Aminverbindungen im erfindungsgemäßen Sinne in der Ölspülung vorliegen. Selbst wenn sich beim Einsatz von konventionellen stark hydrophilen Alkalireserven unerwünschte Verdickungen ausgebildet haben, läßt sich dieser Verdickungszustand durch Einarbeitung der erfindüngsgemäßen Additivkomponente in das Gesamtsystem wieder beseitigen.

Im nachfolgenden sind zunächst nähere Angaben zu den erfindungsgemäß ausgewählten basischen Aminverbindungen ausgeprägt oleophiler Natur zusammengefaßt.

Basische Aminverbindungen mit kürzeren Kohlenstoffketten sind bekanntlich zu einem beträchtlichen Ausmaß wasserlöslich und gegebenenfalls in beliebigen Mengenverhältnissen wassermischbar. Die erfindungsgemäß ausgewählten Aminverbindungen kennzeichnen sich demgegenüber durch deutlich eingeschränkte Wasserlöslichkeit bei gleichzeitiger Ausbildung ihres oleophilen Charakters. Ihre Wasserlöslichkeit bei Raumtemperatur liegt unterhalb 10 Gew.-% und überschreitet in der bevorzugten Ausführungsform den Wert von 5 Gew.-% nicht. Wichtig sind vor allen Dingen solche oleophilen Aminverbindungen, die sehr geringe Grenzwerte für ihre Wasserlöslichkeit bei Raumtemperatur besitzen. Ein wichtiger Grenzwert liegt bei 1 Gew.-%, vorzugsweise bei weniger als 0,1 Gew.-%. Für die Erfindung besonders wichtige basische Amine können als praktisch wasserunlöslich angesprochen werden.

Oleophile Amine der geschilderten Art sind generell verwendbar, soweit sie zur Salzbildung mit den bei der Esterhydrolyse frei werdenden Carbonsäuren befähigt sind und bevorzugt in der Ölphase löslich sind. Im Rahmen der erfindungsgemäßen Absicht, eine möglichst geringe toxische Umweltbelastung auszulösen, wird in diesem großen Bereich sachlich geeigneter Aminverbindungen ökologisch vergleichsweise unbedenklichen Verbindungen der Vorzug gegeben. Aromatische Amine sind aus diesen Überlegungen heraus in der Regel weniger geeignet, so daß in einer weiteren bevorzugten Ausführungsform der Erfindung oleophile Aminverbindungen verwendet werden, die überwiegend frei von aromatischen Bestandteilen sind. Geeignete Verbindungen zur Durchführung der erfindungsgemäßen Lehre lassen sich allgemein den Gruppen der aliphatischen, der cycloaliphatischen und/oder der heterocyclischen Amine zuordnen. Die jeweiligen Vertreter können dabei eine oder auch mehrere mit Carbonsäuren zur Salzbildung befähigte N-Gruppierungen enthalten. Aminverbindungen der geschilderten Art können stickstoffhaltige gesättigte Kohlenwasserstoffverbindungen sein, ebenso sind aber auch Aminkohlenwasserstoffe geeignet, die in wenigstens einem ihrer Kohlenwasserstoffglieder eine oder mehrere olefinisch ungesättigte Gruppierungen enthalten.

In der Auswahl der bestimmten Konstitution der erfindungsgemäß eingesetzten Aminkomponenten besteht große Freiheit. Wirtschaftliche Überlegungen bestimmen hier sehr weitgehend die Auswahl der jeweils bestimmten Komponenten. Allgemein lassen sich für die Praxis besonders geeignete Vertreter den folgenden Klassen zuordnen:

Weitgehend wasserunlösliche primäre, sekundäre und/oder tertiäre Amine, entsprechende Aminoamide und/oder Stickstoff als Ringbestandteil enthaltende Heterocyclen. Besonders geeignet können solche Aminbasen sein, die wenigstens einen langkettigen Kohlenwasserstoffrest mit bevorzugt 8 bis 36 C-Atomen und insbesondere mit 10 bis 24 C-Atomen im Molekül aufweisen. Solche Kohlenwasserstoffreste können unmittelbar an dem Stickstoffatom angreifen. Sie können aber auch - beispielsweise im Fall der Aminoamide - über eine funktionelle Gruppe an einen N-haltigen Molekülteil gebunden sein, wobei dann sicherzustellen ist, daß im Gesamtmolekül wenigstens ein basisches N-Atom vorliegt, das zur Salzbildung mit den durch Esterhydrolyse frei werdenden Carbonsäuren befähigt ist. Typische Beispiele für die verschiedenen hier angesprochenen Klassen werden im nachfolgenden eingehender geschildert.

In eine erste Gruppe fallen primäre, sekundäre und tertiäre Amine mit einem oder mehreren N-Atomen, wobei in der jeweiligen Verbindung das Verhältnis von Kohlenwasserstoffgruppen zu Amingruppen so gewählt ist, daß die zuvor gegebenen Bedingungen zur eingeschränkten Wasserlöslichkeit und ausgeprägten Oleophilie erfüllt sind. In einfachen nicht substituierten Verbindungen der hier betroffenen Art beträgt das Zahlenverhältnis C/N wenigstens 5 oder besser 6, liegt aber bevorzugt darüber. In großtechnisch leicht zugänglichen Aminen der hier betroffenen Art liegen am Aminostickstoff häufig 1 oder 2 vergleichsweise langkettige Kohlenwasserstoffreste und - sofern vorhanden - zum Rest Methylreste vor. Typische Beispiele der hier betroffenen Art enthalten pro Molekül 1 Stickstoffatom. Technisch leicht zugänglich sind aber auch vergleichbare Verbindungen, die sich von polyfunktionellen Aminen, insbesondere von niederen Diaminen, z.B. vom Ethylendiamin oder Propylendiamin, ableiten. Niedere Polyamine der hier betroffenen Art sind hoch wasserlöslich. Werden in ihr Molekül jedoch ein oder mehrere langkettige Kohlenwasserstoffreste der zuvor geschilderten Art eingeführt, dann entstehen geeignete Additive im Sinne der Erfindung, sofern wenigstens ein Stickstoffatom zur Salzbildung mit den Carbonsäuren befähigt ist. Geeignete Vertreter dieser Art sind beispielsweise Verbindungen der allgemeinen Formel R-NH-(CH$_2$)n-NH$_2$. Hierin bedeutet R beispielsweise einen Kohlenwasserstoffrest mit 8 bis 22 C-Atomen und n eine niedere Zahl bis 6, insbesondere 2 bis 4.

Primäre und gegebenenfalls auch sekundäre Amine mit stark oleophilen Molekülbestandteilen können selbst dann noch im erfindungsgemäßen Sinne brauchbar sein, wenn an den vorliegenden NH-Gruppen durch Alkoxylierung mit beispielsweise Ethylenoxid und/oder Propylenoxid bzw. höheren Homologen, z. B. Butylenoxid, Oligo-Alkoxidgruppen eingeführt sind. So sind beispielsweise langkettige primäre und/oder sekundäre Amine auch noch bei Einführung von bis zu 8 bis 10 EO- und/oder PO-Gruppen so hinreichend oleophil, daß sie für die Verwendung im erfindungsgemäßen Sinne in Betracht kommen können.

Technisch leicht zugängliche Aminverbindungen für die Verwendung im Rahmen der Erfindung leiten sich aus der Epoxidierung olefinisch ungesättigter Kohlenwasserstoffverbindungen mit anschließender Einführung der N-Funktion durch Addition an die Epoxidgruppe ab. Besondere Bedeutung hat hierbei die Umsetzung der epoxidierten Zwischenkomponenten mit primären und/oder sekundären Aminen unter Ausbildung der entsprechenden Alkanolamine. Zur Öffnung des Epoxidringes ebenso geeignet sind Polyamine, insbesondere niedere Polyamine von der Art entsprechender Alkylendiamine.

Eine weitere wichtige Klasse der oleophilen Aminverbindungen für den erfindungsgemäßen Zweck sind Aminoamide, die sich aus bevorzugt langkettigen Carbonsäuren und polyfunktionellen, insbesondere niederen Aminen der zuvor genannten Art ableiten. Wesentlich ist hier, daß wenigstens eine der Aminofunktionen nicht in Amidform gebunden wird, sondern als potentiell salzbildende basische Aminogruppe erhalten bleibt. Sowohl hier wie in allen zuvor geschilderten Fällen können die basischen Aminogruppen bei ihrer Ausbildung als sekundäre oder tertiäre Aminogruppen zusätzlich zum oleophilen Molekülteil Hydroxyalkylsubstituenten und hier insbesondere niedere Hydroxyalkylsubstituenten mit bis zu 5 vorzugsweise mit bis zu 3 C-Atomen aufweisen. Geeignete N-basische Ausgangskomponenten für die Herstellung solcher Additionsprodukte mit langkettigen oleophilen Molekülbestandteilen sind Monoethanolamin und/oder Diethanolamin. So sind in einer bevorzugten Ausführungsform geeignete Additive im Sinne der Erfindung Reaktionsprodukte aus der Epoxidierung langkettiger Olefine mit beispielsweise 8 bis 36, insbesondere 10 bis 18 C-Atomen und Mono- und/oder Diethanolamin. Alphaständigen Olefinen der genannten Art kann als Ausgangsmaterial für die Epoxidierung und die nachfolgende Umsetzung zum sekundären und/oder tertiären Amin mit Hydroxyalkylgruppen am N-Atom besondere Bedeutung zukommen.

Eine wichtige Klasse für heterocyclische Additive zur Regulierung der Fließeigenschaften der Bohrspülschlämme im Sinne der Erfindung sind die Imidazolinverbindungen. Ebenso können bedeutungsvoll aus dieser heterocyclischen Gruppe Alkylpyridine sein.

Die Additive auf Basis oleophiler basischer Aminverbindungen im Sinne der Erfindung werden den Bohrspülungen vorzugsweise in Mengen nicht über 10 lb/bbl und vorzugsweise in Mengen nicht über 5 lb/bbl zugesetzt. Die Einsatzmenge kann unter anderem durch die Form des in der Praxis beabsichtigten Einsatzes bestimmt werden. Hier sind verschiedenen Varianten möglich, die auch miteinander verbunden werden können.

In einer ersten Ausführungsform wird das die Rheologie regelnde Additiv dem Bohrspülschlamm von Anfang an in beträchtlicher Menge zugesetzt. Es kann dabei dann eine Doppelfunktion übernehmen. Einerseits bildet es die Alkalireserve der Bohrspülung zum Abfangen eventueller Einbrüche saurer Bestandteile wie $CO_2$ und/oder $H_2S$, andererseits nimmt die im gegebenenfalls starken Überschuß vorliegende basische Aminverbindung die durch Hydrolyse entstehenden Carbonsäureanteile im Ausmaße ihrer Bildung auf und überführt sie in die entsprechenden öllöslichen Salze. Im entgegengesetzten Grenzfall arbeitet die Erfindung zunächst mit der auf Esteröl basierten Spülung ohne Zusatz der erfindungsgemäßen Additive - beispielsweise im Sinne der Lehre der eingangs genannten älteren Patentanmeldungen EP-A1-374 671 und EP-A1 374 672. Tritt eine Alterung der Bohrspülung auf, die sich durch beginnendes Ansteigen der Viskositätswerte erkenntlich macht, wird das erfindungsgemäße Additiv zur Regulierung der Rheologie absatzweise oder kontinuierlich der Bohrspülung zudosiert. Mühelos kann das während des Bohrvorganges erfolgen. Es leuchtet ein, daß zwischen diesen beiden Extremen beliebige Kombinationen der Zudosierung des erfindungsgemäßen Additivs vor und während des Betriebes der Bohrung bzw. der Benutzung der Bohrspülung möglich sind. Bei Auswahl geeigneter, wirkungsvolle Emulgatorsysteme bildender Aminverbindungen ist es sogar möglich, Emulgatoranteile im nachzuspeisenden Ölanteil einzusparen und sich stattdessen der in situ entstehenden Aminsalze mit Emulgatorwirkung zur Stabilisierung des Gesamtsystems zu bedienen.

Die Aminverbindungen können den Invert-Bohrschlämmen unmittelbar oder mittelbar zugegeben werden. So können sie vorab in die Esteröl enthaltende Ölphase eingearbeitet sein oder aber sie werden dem Gesamtsystem als solche zugemischt. In einer besonders geeigneten Ausführungsform werden Additivkonzentrate vorbereitet, die dann insbesondere im laufenden Betrieb dem Bohrschlamm zugesetzt werden können. Hierbei handelt es sich um Lösungen der oleophilen Aminverbindungen in geeigneten Lösungsmitteln bei bevorzugten Konzentrationen des Additivs von wenigstens 20 Gew.-%, vorzugsweise jedoch von wenigstens 50 Gew.-%. Als geeignete Lösungsmittel sind nonpolluting oils zu nennen, die sich homogen in den Bohrschlamm einarbeiten lassen. Besonders geeignet sind hier Esteröle, beispielsweise solche der in den beiden genannten älteren Anmeldungen geschilderten Art.

Wie bereits angegeben ist es ein wichtiger Vorteil der Erfindung, daß die Mitverwendung der erfindungsgemäßen Additive zur Regulierung der Fließ- und Pumpfähigkeit der Bohrspülschlämme jetzt auch bei Ölphasen auf Basis Esteröl die Möglichkeit eröffnet, konventionelle Alkalireserven in Mengen mitzuverwenden wie sie bisher für Bohrölschlämme auf Basis von Mineralölen als Ölphase üblich sind. So kann beispielsweise Kalk in Mengen bis zu 5 lb/bbl eingesetzt werden, ohne daß nachhaltige Schädigungen der Bohrspülung im Betrieb zu befürchten sind. Entsprechendes gilt für die in den älteren Anmeldungen genannten Zinkverbindungen wie Zinkoxid, Zinkkomplexverbindungen und dergleichen. Überraschenderweise können aber sogar stark hydrophile Basen aus der bisherigen Praxis der Alkalisierung von Bohrspülungen mitverwendet werden. Wird die Alkalireserve in der geschilderten Art mit konventionellen Mitteln, beispielsweise durch Mitverwendung nicht unbeträchtlicher Mengen an Kalk sichergestellt, dann kann die Menge der erfindungsgemäß gewählten Additive auf Aminbasis in den Bereich abgesenkt werden, der im fortlaufenden Verfahren durch die Esterverseifung benötigt wird. In einer wichtigen Ausführungsform wird dabei jeweils nur mit leichtem Überschuß der oleophilen Aminbase gearbeitet und der durch Salzbildung verbrauchte Anteil absatzweise oder kontinuierlich während des Bohrvorganges zudosiert. In solchen Ausführungsformen kann der Zusatz an Aminbase beispielsweise im Bereich von 0,1 bis 2 lb/bbl (Aminbase/Bohrspülung) oder auch noch darunter liegen.

Die erfindungsgemäß geeigneten Esteröle sind Ester aus monofunktionellen Carbonsäuren bzw. Carbonsäuregemischen und monofunktionellen Alkoholen, insbesondere die in den genannten älteren Anmeldungen im einzelnen geschilderten Estertypen. Zur Vervollständigung der Erfindungsoffenbarung werden hier wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus monofunktionellen Alkoholen mit 2 bis 12, insbesondere mit 4 bis 12 C-Atomen und aliphatisch gesättigten Monocarbonsäuren mit 12 bis 16 C-Atomen oder deren Abmischung mit höchstens gleichen Mengen anderer Monocarbonsäuren als Ölphase verwendet. Bevorzugt sind dabei Esteröle, die zu wenigstens 60 Gew.-% - bezogen auf Carbonsäuregemisch - Ester aliphatischer $C_{12-14}$-Monocarbonsärensind und gewünschtenfalls zum Rest auf untergeordnete Mengen kürzerkettiger aliphatischer und/oder längerkettiger, dann insbesondere 1- und/oder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens 30 mPas besitzen. Die im Bohrschlamm eingesetzten Ester zeigen Erstarrungswerte (Fließ- und Stockpunkt) unterhalb - 10 °C, vorzugsweise unterhalb - 15 °C, und besitzen dabei insbesondere Flammpunkte oberhalb 100 °C, vorzugsweise oberhalb 150 °C. Die im Ester bzw. Estergemisch vorliegenden Carbonsäuren sind überwiegend geradkettig und dabei bevorzugt pflanzlichen Ursprungs. Sie können sich von entsprechenden Triglyceriden wie Kokosöl, Palmkernöl und/oder Babassuöl ableiten. Die monofunktionellen Alkoholreste der eingesetzten Ester leiten sich insbesondere von geradkettigen und/oder verzweigten gesättigten Alkoholen mit vorzugsweise 4 bis 10 C-Atomen ab. Auch diese monofunktionellen Alkoholkomponenten können pflanzlichen und/oder tierischen Ursprungs und dabei durch reduktive Hydrierung entsprechender Carbonsäureester gewonnen worden sein.

Die andere Klasse besonders geeigneter Esteröle leitet sich von olefinisch 1- und/oder mehrfach ungesättigten Monocarbonsäuren mit 16 bis 24 C-Atomen oder deren Abmischungen mit untergeordneten Mengen anderer, insbesondere gesättigter Monocarbonsäuren und monofunktionellen Alkoholen mit 2 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr als 80 Gew.-% und insbesondere zu mehr als 90 Gew.-% von olefinisch ungesättigten Carbonsäuren des Bereichs von $C_{16-24}$ ableiten.

Auch hier liegen die Erstarrungswerte (Fließ- und Stockpunkt) unterhalb - 10 °C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield-(RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten $C_{16-24}$-Monocarbonsäurereste zu nicht mehr als 35 Gew.-% von 2- und mehrfach olefinisch ungesättigten Säuren ab, wobei bevorzugt wenigstens 60 Gew.-% der Säurereste einfach olefinisch ungesättigt sind. In der zweiten Ausführungsform leiten sich die im Estergemisch vorliegenden $C_{16-24}$-Monocarbonsäuren zu mehr als 45 Gew.-%, vorzugsweise zu mehr als 55 Gew.-% von 2- und/oder mehrfach olefinisch ungesättigten Säuren ab. Im Estergemisch vorliegende gesättigte Carbonsäuren des Bereiches $C_{16/18}$ machen zweckmäßigerweise nicht mehr als 20 Gew.-% und insbesondere nicht mehr als 10 Gew.-% aus. Bevorzugt liegen gesättigte Carbonsäureester aber im Bereich niedrigerer C-Zahlen der Säurereste. Auch hier sind die vorliegenden Carbonsäurereste überwiegend geradkettig und dabei bevorzugt pflanzlichen und/oder tierischen Ursprungs. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

Invert-Bohrspülschlämme der hier betroffenen Art enthalten üblicherweise zusammen mit der geschlossenen Ölphase die fein-disperse wäßrige Phase in Mengen von 5 bis 45 Gew.-% und vorzugsweise in Mengen von 5 bis 25 Gew.-%. Dem Bereich von 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von 10 bis 60 mPas, bevorzugt von 15 bis 40 mPas, Fließgrenze (Yield Point YP) im Bereich von 5 bis 40 lb/100 ft$^2$, bevorzugt von 10 bis 25 lb/100 ft$^2$ - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-A-4,374,737 und der dort zitierten Literatur beschrieben. Ein besonders geeigneter Emulgatortyp ist das von der Firma NL Baroid, London, unter dem Handelsnamen "EZ-mul" vertriebene Produkt.

Emulgatoren der hier betroffenen Art werden im Handel als hochkonzentrierte Wirkstoffzubereitungen vertrieben und können beispielsweise in Mengen von 2,5 bis 5 Gew.-%, insbesondere in Mengen von 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von 15 bis 20 lb/bbl oder im Bereich von 5 bis 7 Gew.-% - bezogen auf die Esterölphase.

In Bohrspülungen der hier betroffenen Art ist der üblicherweise eingesetzte Viskositätsbildner ein kationisch modifizierter feinteiliger Bentonit, der insbesondere in Mengen von 8 bis 10 lb/bbl oder im Bereich von 2 bis 4 Gew.-%, bezogen auf Esterölphase, verwendet werden kann. Das in der einschlägigen

7

Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt werden. Es ist beispielsweise möglich, durch Zusatz von Baryt das spezifische Gewicht der Bohrspülung auf Werte im Bereich bis 2,5 und vorzugsweise im Bereich von 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmittel zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB-A-2 158 437, EP-A-229 912 und DE-A-32 47 123.

Die erfindungsgemäß auf der Mitverwendung von Esterölen der geschilderten Art aufgebauten Bohrspülflüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

Zur Umrechnung der im hier betroffenen Zusammenhang im fach-technischen Gebrauch üblichen Maßzahlen, die nicht dem metrischen System entsprechen - und in diesem üblichen Sprachgebrauch in der Erfindungsgeschreibung und den nachfolgenden Beispielen benutzt sind - geltend die folgenden Umrechnungsfaktoren:

1 lb = 0,454 kg; 1 bbl = 159 l;

1 lb/bbl = 2,85 kg/m$^3$, insbesondere im Zusammenhang mit Zusatzmenge der Alkalireserve

1 lb/100 ft$^2$ = 0,4788 Pa, insbesondere im Zusammenhang mit Bestimmung der Fließgrenze (YP) und der Gelstärke

## Beispiele

In den nachfolgenden Beispielen werden zwei typische Esteröle als Ölphase der Invert-Bohrspülungen eingesetzt. In beiden Fällen handelt es sich um Monocarbonsäuren/Monoalkoholester, die wie folgt zu charakterisieren sind:

Beispiele 1 bis 3: Destillierter n-Hexyl-laurinsäure-ester mit den folgenden Kennzahlen Flammpunkt oberhalb 165 °C, Fließpunkt unterhalb - 5 °C, Dichte (20 °C) von 0,857 bis 0,861, Jodzahl und Säurezahl jeweils unter 1, Wassergehalt unterhalb 0,3 % sowie den nachfolgenden Viskositätsdaten (Brookfield mPas) im Tieftemperaturbereich: - 5 °C 22,5 bis 25,5; + 2 °C 15 bis 18; + 5 °C 15 bis 18; + 10 °C ca. 15; 20 °C 12 bis 14.

Beispiele 4 bis 10: Isobutyl-Rübölester auf Basis einer Mischung überwiegend ungesättigter geradkettiger Carbonsäuren, die etwa der folgenden Verteilung entsprechen: 60 % Ölsäure, 20 % Linolsäure, 9 bis 10 % Linolensäure, olefinisch ungesättigte $C_{20/22}$-Monocarbonsäuren etwa 4 %, zum Rest gesättigte Monocarbonsäuren überwiegend des Bereichs $C_{16/18}$.

Der eingesetzte Rübölester besitzt weiterhin die folgenden Kenndaten: Dichte (20 °C) 0,872 g/cm$^3$; Fließpunkt unterhalb - 15 °C; Flammpunkt (DIN 51584) oberhalb 180 °C; Säurezahl (DGF-C-V 2) 1,2; Viskosität bei 0 °C 32 mPas, Viskosität bei 5 °C 24 mPas.

Eine Invert-Bohrspülung wird in konventioneller Weise unter Benutzung der folgenden Mischungsbestandteile hergestellt:

230 ml Esteröl

26 ml Wasser

6 g organophiler Bentonit (Geltone II der Fa. NL Baroid)

12 g organophiler Lignit (Duratone der Fa. NL Baroid)

x g Kalk

6 g W/O-Emulgator (EZ-mul NT der Fa. NL Baroid)

346 g Baryt

9,2 g $CaCl_2$ x 2 $H_2O$

y g oleophiles basisches Amin

Zunächst wird an der jeweils geprüften Invert-Bohrspülung durch Viskositätsmessung bei 50 °C am

ungealterten Material die Plastische Viskosität (PV), die Fließgrenze (YP) sowie die Gelstärke nach 10 sec. und 10 min. bestimmt.

Anschließend wird die Invert-Bohrspülung 16 Stunden bei 125 °C im Autoklaven im sogenannten "Roller-oven" gealtert um den Temperatureinfluß auf die Emulsionsstabilität zu überprüfen. Danach werden erneut die Viskositätswerte bei 50 °C bestimmt.

Beispiel 1

Es wird mit dem Laurinsäure/n-Hexylester als Ölphase gearbeitet. Kalk wird in einer Menge von 2 g der angegebenen Rahmenrezeptur zugesetzt. Dabei wird ohne Zusatz von einem basischem Amin mit ausgeprägt oleophilem Charakter im Sinne der erfindungsgemäßen Definition gearbeitet. Am ungealterten und am gealterten Material werden die folgenden Werte bestimmt.

|  | ungealtertes Material | gealtertes Material |
|---|---|---|
| Plastische Viskosität (PV) | 19 | 50 |
| Fließgrenze (YP) | 8 | 36 |
| Gelstärke (lb/100 ft$^2$) |  |  |
| 10 sec. | 6 | 41 |
| 10 min. | 7 | 48 |

Schon bei der Alterung für nur 16 Stunden bei 125 °C tritt eine beträchtliche Verdickung der Bohrspülung ein. Die eingesetzte Kalkmenge liegt oberhalb des Schwellenwertes von 2 lb/bbl.

Beispiel 2

Die Invert-Bohrspülung des Beispiels 1 wird jetzt zusätzlich mit 0,5 g eines ausgeprägt oleophilen basischen Amins versetzt. Als basisches Amin kommt das Umsetzungsprodukt eines epoxidierten $C_{12/14}$-alpha-Olefins und Diethanolamin ("Araphen G2D" der Anmelderin) zum Einsatz.

Die am ungealterten und gealterten Material bestimmten rheologischen Daten sind jetzt die folgenden:

|  | ungealtertes Material | gealtertes Material |
|---|---|---|
| Plastische Viskosität (PV) | 19 | 36 |
| Fließgrenze (YP) | 9 | 18 |
| Gelstärke (lb/100 ft$^2$) |  |  |
| 10 sec. | 5 | 20 |
| 10 min. | 7 | 33 |

Beispiel 3

Der Ansatz des Beispiels 2 wird wiederholt, jedoch wird der Invert-Bohrspülung das oleophile basische Amin ("Araphen G2D") in einer Menge von 1 g zugesetzt. Die am ungealterten und am gealterten Material bestimmten Werte sind die folgenden:

|  | ungealtertes Material | gealtertes Material |
|---|---|---|
| Plastische Viskosität (PV) | 20 | 21 |
| Fließgrenze (YP) | 8 | 6 |
| Gelstärke (lb/100 ft$^2$) | | |
| 10 sec. | 5 | 4 |
| 10 min. | 6 | 5 |

Der Vergleich der Beispiele 1 bis 3 gegeneinander zeigt klar die stabilisierende Wirkung des Zusatzes eines oleophilen basischen Amins im Sinne der erfindungsgemäßen Definition.

Beispiel 4

In diesem und den nachfolgenden Beispielen 5 bis 9 wird der zuvor definierte Isobutyl-Rubölester als geschlossene Ölphase eingesetzt.

Im vorliegenden Beispiel 4 wird zunächst ohne Zusatz von Kalk jedoch unter Zusatz 2 g des zuvor definierten oleophilen basischen Amins ("Araphen G2D") gearbeitet. Die am ungealterten und gealterten Material bestimmten Werte sind die folgenden:

|  | ungealtertes Material | gealtertes Material |
|---|---|---|
| Plastische Viskosität (PV) | 28 | 28 |
| Fließgrenze (YP) | 11 | 4 |
| Gelstärke (lb/100 ft$^2$) | | |
| 10 sec. | 15 | 6 |
| 10 min. | 13 | 9 |

Beispiel 5

Der Ansatz des Beispiels 4 wird wiederholt, jedoch wird hier als oleophiles basisches Amin Stearylamin in einer Menge von 2 g eingesetzt. Die am ungealterten und gealterten Material bestimmten Werte sind die folgenden:

|  | ungealtertes Material | gealtertes Material |
|---|---|---|
| Plastische Viskosität (PV) | 27 | 27 |
| Fließgrenze (YP) | 16 | 5 |
| Gelstärke (lb/100 ft$^2$) | | |
| 10 sec. | 12 | 5 |
| 10 min. | 13 | 7 |

Beispiel 6

Zum Vergleich wird der Isobutyl-Rübölester mit 1 g Kalk versetzt, ohne jedoch oleophile basische Aminverbindungen mitzuverwenden. Die in der Rahmenrezeptur eingesetzte Menge von 1 g Kalk liegt unterhalb des Schwellenwertes von 2 lb/bbl, der für die hier eingesetzte Rezeptur einem Zusatz von etwa 1,35 g Kalk entspricht.

Die am ungealterten und gealterten Material bestimmten rheologischen Werte sind wie folgt:

|  | ungealtertes Material | gealtertes Material |
|---|---|---|
| Plastische Viskosität (PV) | 27 | 28 |
| Fließgrenze (YP) | 10 | 18 |
| Gelstärke (lb/100 ft$^2$) | | |
| 10 sec. | 6 | 7 |
| 10 min. | 8 | 8 |

Beispiel 7

Der Rezeptur des Beispiels 6 werden jetzt zusätzlich 2 g der oleophilen basischen Aminverbindung "Araphen G2D" zugesetzt. Die an der Bohrspülung bestimmten rheologischen Werte sind die folgenden:

|  | ungealtertes Material | gealtertes Material |
|---|---|---|
| Plastische Viskosität (PV) | 30 | 32 |
| Fließgrenze (YP) | 10 | 11 |
| Gelstärke (lb/100 ft$^2$) | | |
| 10 sec. | 8 | 7 |
| 10 min. | 9 | 7 |

Beispiel 8

Es wird wieder ein Isobutyl-Rübölester ohne Mitverwendung des oleophilen basischen Amins jedoch unter Zusatz von 2 g Kalk zur Rahmenrezeptur untersucht. Die gemessenen Rheologiedaten sind wie folgt:

|  | ungealtertes Material | gealtertes Material |
| --- | --- | --- |
| Plastische Viskosität (PV) | 27 | 84 |
| Fließgrenze (YP) | 12 | 22 |
| Gelstärke (lb/100 ft$^2$) |  |  |
| 10 sec. | 7 | 21 |
| 10 min. | 8 | 51 |

Der Vergleich dieses Beispiels 8 mit dem Beispiel 6 zeigt die schwerwiegende Verdickungswirkung, die bei der Erhöhung der Kalkmenge über den Schwellenwert von etwa 2 lb/bbl bei der Alterung ausgelöst wird.

Beispiel 9

Einer Invert-Bohrspülung gemäß Beispiel 8 werden jetzt zusätzlich 2 g "Araphen G2D" zugegeben. Die am ungealterten und gealterten Material bestimmten Rheologiewerte sind die folgenden:

|  | ungealtertes Material | gealtertes Material |
| --- | --- | --- |
| Plastische Viskosität (PV) | 28 | 32 |
| Fließgrenze (YP) | 15 | 12 |
| Gelstärke (lb/100 ft$^2$) |  |  |
| 10 sec. | 8 | 6 |
| 10 min. | 8 | 6 |

Der Vergleich mit den Rheologiedaten des Beispiels 8 zeigt den Einfluß der erfindungsgemäß zugesetzten oleophilen basischen Aminverbindung.

Beispiel 10

Eine Invert-Bohrspülung gemäß Beispiel 8 wird zusätzlich zunächst mit 2 g Diethylentriamin, d. h. mit einer ausgeprägt hydrophilen Base versetzt. Dann werden zunächst die Rheologiedaten am ungealterten Material bestimmt.

Anschließend wird diese Invert-Spülung wie zuvor angegeben 16 Stunden bei 125 °C gealtert. Es zeigt sich, daß die Spülung so stark eingedickt ist, daß eine zahlenmäßige Erfassung der Rheologiedaten nicht möglich ist.

Der eingedickte Masse werden jeweils 2 g der oleophilen basischen Aminverbindung "Araphen G2D" zugesetzt und dieses Stoffgemisch erneut für 16 Stunden bei 125 °C im Roller-oven gealtert. Es tritt eine Verflüssigung der eingedickten Masse auf, die eine meßtechnische Erfassung der Rheologiedaten ermöglicht. Insgesamt werden die folgenden Werte bestimmt:

| | ungealtertes Material | 1. Alterung | 2. Alterung nach Zusatz der Aminverbindung |
|---|---|---|---|
| Plastische Viskosität (PV) | 31 | nicht meßbar | 45 |
| Fließgrenze (YP) | 24 | | 25 |
| Gelstärke | | | |
| 10 sec. | 16 | | 114 |
| 10 min. | 23 | | 120 |

**Patentansprüche**

1. Verwendung von basischen und zur Salzbildung mit Carbonsäuren befähigten Aminverbindungen ausgeprägt oleophiler Natur und entsprechend beschränkter Wasserlöslichkeit als Additiv in W/O-Invert-Bohrölschlämmen, die in der geschlossenen Ölphase Esteröle aus monofunktionellen Carbonsäuren mit 6 bis 24 C-Atomen und monofunktionellen Alkoholen und zusammen mit der dispersen wäßrigen Phase Emulgatoren, Viskositätsbildner, Beschwerungsmittel, fluid-loss-Additive und gewünschtenfalls weitere Zusatzstoffe enthalten, zu deren Schutz gegen unerwünschte Eindickung im Gebrauch und /oder zur Verbesserung ihrer Fließfähigkeit.

2. Ausführungsform nach Anspruch 1, dadurch gekennzeichnet, daß die basischen und dabei oleophilen Aminverbindungen gleichzeitig anteilsweise als Alkalireserve der Invert-Bohrspülung Verwendung finden.

3. Ausführungsform nach Ansprüchen 1 und 2, dadurch gekennzeichnet, daß die oleophilen basischen Amine zusammen mit konventionellen Alkalireserven, insbesondere zusammen mit Kalk eingesetzt werden.

4. Ausführungsform nach Ansprüchen 1 bis 3, dadurch gekennzeichnet, daß oleophile Aminverbindungen verwendet werden, die frei oder überwiegend frei sind von aromatischen Bestandteilen.

5. Ausführungsform nach Ansprüchen 1 bis 4, dadurch gekennzeichnet, daß mit gegebenenfalls olefinisch ungesättigten aliphatischen, cycloaliphatischen und/oder heterocyclischen oleophilen basischen Aminverbindungen gearbeitet wird, die eine oder auch mehrere mit Carbonsäuren zur Salzbildung befähigte N-Gruppierungen enthalten.

6. Ausführungsform nach Ansprüchen 1 bis 5, dadurch gekennzeichnet, daß basische Aminverbindungen eingesetzt werden, deren Wasserlöslichkeit bei Raumtemperatur höchstens 5 Gew.-% beträgt und vorzugsweise unter 1 Gew.-% und insbesondere unterhalb 0,1 Gew.-% liegt.

7. Ausführungsform nach Ansprüchen 1 bis 6, dadurch gekennzeichnet, daß weitgehend wasserunlösliche primäre, sekundäre und/oder tertiäre Amine, die auch beschränkt alkoxyliert und/oder mit insbesondere Hydroxylgruppen substituiert sein können, entsprechende Aminoamide und/oder N als Ringbestandteil enthaltende Heterocyclen verwendet werden.

8. Ausführungsform nach Ansprüchen 1 bis 7, dadurch gekennzeichnet, daß mit basischen Aminverbindungen gearbeite wird, die wenigstens einen langkettigen Kohlenwasserstoffrest mit bevorzugt 8 bis 36 C-Atomen, insbesondere mit 10 bis 24 C-Atomen aufweisen, der auch ein- oder mehrfach olefinisch ungesättigt sein kann.

9. Ausführungsform nach Ansprüchen 1 bis 8, dadurch gekennzeichnet, daß die oleophilen basischen Aminverbindungen der Bohrspülung in Mengen bis zu 10 lb/bbl, vorzugsweise in Mengen bis 5 lb/bbl und insbesondere im Bereich von 0,1 bis 2 lb/bbl zugesetzt werden.

10. Ausführungsform nach Ansprüchen 1 bis 9, dadurch gekennzeichnet, daß die oleophilen basischen Aminverbindungen in Bohrschlämmen zum Einsatz kommen, die Esteröle aus monofunktionellen Alkoholen und monofunktionellen Carbonsäuren natürlichen Ursprüngs mit 8 bis 24 C-Atomen enthalten.

11. W/O-Invert-Bohrspülungen, die für die off-shore-Erschließung von Erdöl- bzw. Erdgasvorkommen geeignet sind und in einer geschlossenen, Esteröle aus monofunktionellen Carbonsäuren mit 6 bis 24 C-Atomen und monofunktionellen Alkoholen enthaltende Ölphase eine disperse wäßrige Phase zusammen mit Emulgatoren, Viskositätsbildnern, Beschwerungsmitteln, fluid-loss-Additiven und gewünschtenfalls weiteren üblichen Zusatzstoffen enthalten, dadurch gekennzeichnet, daß sie zusätzlich basische und zur Salzbildung mit Carbonsäuren befähigte Aminverbindungen ausgeprägt oleophiler Natur und entsprechend beschränkter Wasserlöslichkeit als Additiv zum Schutz gegen unerwünschte Eindickung im Gebrauch und/oder zur Verbesserung ihrer Fließfähigkeit enthalten.

12. Bohrspülung nach Anspruch 11, dadurch gekennzeichnet, daß die oleophilen basischen Aminverbindungen die Alkalireserve oder einen überwiegenden Anteil der Alkalireserve der Bohrspülung bilden oder aber in Abmischung mit konventionellen Alkalireserven, insbesondere mit Kalk vorliegen.

13. Bohrspülung nach Ansprüchen 11 und 12, dadurch gekennzeichnet, daß als die Rheologie der Bohrspülung schützendes Additiv gegebenenfalls olefinisch ungesättigte aliphatische, cycloaliphatische und/oder heterocyclische basische Aminverbindungen mit oleophilem Charakter vorliegen, die eine oder auch mehrere mit Carbonsäuren zur Salzbildung befähigte N-Gruppierungen aufweisen.

14. Bohrspülung nach Ansprüchen 11 bis 13, dadurch gekennzeichnet, daß basische Aminverbindungen mit einer Wasserlöslichkeit bei Raumtemperatur im Bereich von höchstens 5 Gew.-%, bevorzugt unterhalb 1 Gew.-% vorliegen.

15. Bohrspülung nach Ansprüchen 11 bis 14, dadurch gekennzeichnet, daß als Rheologie-schützendes Additiv weitgehend wasserunlösliche primäre, sekundäre und/oder tertiäre Amine, die auch beschränkt alkoxyliert und/oder mit insbesondere Hydroxylgruppen substituiert sein können, entsprechende Aminoamide und/oder N als Ringbestandteil enthaltende Heterocyclen vorliegen.

16. Bohrspülung nach Ansprüchen 11 bis 15, dadurch gekennzeichnet, daß als Additiv basische Aminverbindungen vorliegen, die wenigstens einen langkettigen Kohlenwasserstoffrest mit bevorzugt 8 bis 36 C-Atomen, insbesondere mit 10 bis 24 C-Atomen aufweisen, wobei diese Reste auch ein- und/oder mehrfach olefinisch ungesättigt sein können.

17. Bohrspülung nach Ansprüchen 11 bis 16, dadurch gekennzeichnet, daß die oleophilen basischen Aminverbindungen in der Bohrspülung in Mengen bis 10 lb/bbl, vorzugsweise nicht oberhalb 5 lb/bbl vorliegen.

18. Bohrspülung nach Ansprüchen 11 bis 17, dadurch gekennzeichnet, daß die Esterölphase Ester aus monofunktionellen Carbonsäuren mit 12 bis 24 C-Atomen enthält.

19. Additiv für die Verbesserung und insbesondere den Alterungsschutz der Fließeigenschaften von W/O-Invert-Bohrspülmitteln auf Basis einer Esteröle aus monofunktionellen Carbonsäuren mit 6 bis 24 C-Atomen und monofunktionellen Alkoholen enthaltenden geschlossenen Ölphase, die zusammen mit der dispersen wäßrigen Phase Emulgatoren, Viskositätsbildner, Beschwerungsmittel, fluid-loss-Additive und gewünschtenfalls weitere Zusatzstoffe enthalten, dadurch gekennzeichnet, daß es die basischen und zur Salzbildung mit Carbonsäuren befähigten Aminverbindungen ausgeprägt oleophiler Natur und entsprechend beschränkter Wasserlöslichkeit in einem mit der Ölphase mischbaren Lösungsmittel, bevorzugt auf Basis von nonpolluting oils, insbesondere auf Basis Esteröl, gelöst enthält.

**Claims**

1. The use of basic amine compounds of pronounced oleophilic character and limited solubility in water, which are capable of forming salts with carboxylic acids, as an additive for w/o invert drilling muds which contain in the continuous oil phase ester oils of monobasic $C_{6-24}$ carboxylic acids and monohydric alcohols and, together with the disperse aqueous phase, emulsifiers, viscosity generators, weighting agents, fluid loss additives and, if desired, other additives for protecting the drilling muds against unwanted thickening in use and/or for improving their flow properties.

2. The use claimed in claim 1, characterized in that the basic oleophilic amine compounds are also used partly as the alkali reserve of the invert drilling mud.

3. The use claimed in claims 1 and 2, characterized in that the oleophilic basic amines are used together with conventional alkali reserves, more especially together with lime.

4. The use claimed in claims 1 to 3, characterized in that oleophilic amine compounds free or substantially free from aromatic constituents are used.

5. The use claimed in claims 1 to 4, characterized in that optionally olefinically unsaturated aliphatic, cycloaliphatic and/or heterocyclic, oleophilic basic amine compounds containing one or even more N groups capable of forming salts with carboxylic acids are used.

6. The use claimed in claims 1 to 5, characterized in that the basic amine compounds used have a solubility in water at room temperature of at most 5% by weight, preferably less than 1% by weight and more preferably less than 0.1% by weight.

7. The use claimed in claims 1 to 6, characterized in that at least substantially water-insoluble primary, secondary and/or tertiary amines, which may even be alkoxylated to a limited degree and/or substituted by, in particular, hydroxyl groups, corresponding aminoamides and/or heterocycles containing N as a constituent of the ring are used.

8. The use claimed in claims 1 to 7, characterized in that the basic amine compounds used contain at least one long-chain hydrocarbon radical preferably containing from 8 to 36 and, more preferably, from 10 to 24 carbon atoms, which may even be mono- or polyolefinically unsaturated.

9. The use claimed in claims 1 to 8, characterized in that the oleophilic basic amine compounds are added to the drilling mud in quantities of up to 10 lb/bbl, preferably in quantities of up to 5 lb/bbl and more preferably in quantities of 0.1 to 2 lb/bbl.

10. The use claimed in claims 1 to 9, characterized in that the oleophilic basic amine compounds are used in drilling muds containing ester oils of monohydric alcohols and monobasic $C_{6-24}$ carboxylic acids of natural origin.

11. W/o invert drilling muds which are suitable for the offshore development of oil and gas occurrences and, in a continuous oil phase containing ester oils of monobasic $C_{6-24}$ carboxylic acids and monohydric alcohols, contain a disperse aqueous phase together with emulsifiers, viscosity generators, weighting agents, fluid loss additives and, if desired, other typical additives, characterized in that the drilling muds additionally contain basic amine compounds of pronounced oleophilic character and correspondingly limited solubility in water which are capable of forming salts with carboxylic acids as an additive for protection against unwanted thickening in use and for improving their flow properties.

12. A drilling mud as claimed in claim 11, characterized in that the oleophilic basic amine compounds make up the alkali reserve or a predominant part of the alkali reserve of the drilling mud or are present in admixture with conventional alkali reserves, more especially together with lime.

13. A drilling mud as claimed in claims 11 and 12, characterized in that optionally olefinically unsaturated aliphatic, cycloaliphatic and/or heterocyclic basic amine compounds of oleophilic character containing one or even more N groups capable of forming salts with carboxylic acids are present as an additive for protecting the rheology of the drilling mud.

14. A drilling mud as claimed in claims 11 to 13, characterized in that it contains basic amine compounds having a solubility in water at room temperature of at most 5% by weight and preferably below 1% by weight.

15. A drilling mud as claimed in claims 11 to 14, characterized in that substantially water-insoluble primary, secondary and/or tertiary amines, which may even be alkoxylated to a limited degree and/or substituted by, in particular, hydroxyl groups, corresponding aminoamides and/or heterocycles containing N as a constituent of the ring are present as the rheology-protecting additive.

16. A drilling mud as claimed in claims 11 to 15, characterized in that basic amine compounds containing at least one long-chain hydrocarbon radical preferably containing from 8 to 36 and more preferably from 10 to 24 C atoms, which may even be mono- and/or polyolefinically unsaturated, are present as the additive.

17. A drilling mud as claimed in claims 11 to 16, characterized in that the oleophilic basic amine compounds are present in the drilling mud in quantities of up to 10 lb/bbl and preferably in quantities of no more than 5 lb/bbl.

18. A drilling mud as claimed in claims 11 to 17, characterized in that the ester oil phase contains esters of monobasic $C_{12-24}$ carboxylic acids.

19. An additive for improving and, in particular, preventing the ageing of the flow properties of w/o invert drilling muds based on a continuous oil phase containing ester oils of monobasic $C_{6-24}$ carboxylic acids and monohydric alcohols which, together with the disperse aqueous phase, contains emulsifiers, viscosity generators, weighting agents, fluid loss additives and, if desired, other additives, characterized in that it contains the basic amine compounds of pronounced oleophilic character and correspondingly limited solubility in water, which are capable of forming salts with carboxylic acids, in solution in a solvent miscible with the oil phase based preferably on nonpolluting oils and, more preferably, on ester oil.

**Revendications**

1. Utilisation d'aminocomposés basiques et aptes à la salification avec des acides carboxyliques, à caractère oléophile marqué et solubilité dans l'eau limitée en conséquence, comme additif dans des boues de forage E/H inversées, qui renferment dans la phase huileuse fermée des huiles-esters à base d `acides carboxyliques monofonctionnels comportant 6 à 24 atomes de carbone et d'alcools monofonctionnels et, conjointement avec la phase aqueuse dispersée, des émulsifiants, des promoteurs de viscosité, des agents alourdissants, des additifs "fluid-loss" et, le cas échéant, d'autres additifs, pour les protéger contre l'épaississement lors de leur emploi et/ou pour améliorer leur fluidité.

2. Forme de réalisation selon la revendication 1, caractérisée en ce que les aminocomposés basiques et oléophiles sont utilisés simultanément en partie comme réserve d'alcalis de la boue de forage inversée.

3. Forme de réalisation selon les revendications 1 à 2, caractérisée en ce que l'on utilise les amines basiques oléophiles conjointement avec des réserves d'alcalis conventionnelles, en particulier avec de la chaux.

4. Forme de réalisation selon les revendications 1 à 3, caractérisée en ce que l'on utilise des aminocomposés oléophiles, qui sont exempts en totalité ou en majeure partie de constituants aromatiques.

5. Forme de réalisation selon les revendications 1 à 4, caractérisée en ce que l'on travaille avec des aminocomposés basiques oléophiles, aliphatiques, cycloaliphatiques et/ou hétérocycliques, le cas échéant, à insaturation oléfinique, qui renferment un ou plusieurs groupes N aptes à la salification avec des acides carboxyliques.

**6.** Forme de réalisation selon les revendications 1 à 5, caractérisée en ce que l'on met en oeuvre des aminocomposés basiques, dont la solubilité dans l'eau à température ambiante atteint 5 % en poids au maximum et est de préférence inférieure à 1 % en poids et, en particulier, inférieure à 0,1 % en poids.

**7.** Forme de réalisation selon les revendications 1 à 6, caractérisée en ce que l'on utilise des amines primaires, secondaires et/ou tertiaires, largement insolubles dans l'eau, qui peuvent également être alcoxylées de manière limitée et/ou être substituées, en particulier, par des groupes hydroxyle, des aminoamides correspondants et/ou des hétérocycles renfermant N comme constituant du cycle.

**8.** Forme de réalisation selon les revendications 1 à 7, caractérisée en ce que l'on travaille avec des aminocomposés basiques, qui présentent au moins un radical hydrocarboné à chaîne longue comportant de préférence 8 à 36 atomes de C, en particulier 10 à 24 atomes de C, qui peut également être à insaturation oléfinique simple ou multiple.

**9.** Forme de réalisation selon les revendications 1 à 8, caractérisée en ce que les aminocomposés basiques oléophiles de la boue de forage peuvent être additionnés en proportions allant jusqu'à 10 lb/bbl, de préférence jusqu'à 5 lb/bbl et, en particulier, comprises dans la plage s'étendant de 0,1 à 2 lb/bbl.

**10.** Forme de réalisation selon les revendications 1 à 9, caractérisée en ce que les aminocomposés basiques oléophiles sont mis en oeuvre dans des bornes de forage, qui renferment des huiles-esters à base d'alcools monofonctionnels et d'acides carboxyliques monofonctionnels, d'origine naturelle, comportant 8 à 24 atomes de C.

**11.** Bornes de forage E/H inversées, qui sont appropriées à l'exploitation off-shore des gisements de pétrole ou de gaz naturel et qui renferment, dans une phase huileuse fermée contenant des huiles-esters à base d'acides carboxyliques monofonctionnels, comportant 6 à 24 atomes de C et d'alcools monofonctionnels, une phase aqueuse dispersée, conjointement avec des émulsifiants, des promoteurs de viscosité, des agents alourdissants, des additifs "fluid-loss" et, le cas échéant, d'autres additifs usuels, caractérisées en ce qu'elles renferment en plus des aminocomposés basiques et aptes à la salification avec des acides carboxyliques à caractère oléophile marqué et à solubilité dans l'eau limitée en conséquence, comme additif contre l'épaississement indésirable lors de l'emploi et/ou pour améliorer leur fluidité.

**12.** Boue de forage selon la revendication 11, caractérisée en ce que les aminocomposés basiques oléophiles, forment la réserve d'alcalis ou une partie prépondérante de la réserve d'alcalis de la boue de forage, ou bien sont présents en mélange avec des réserves d'alcalis conventionnelles, en particulier avec de la chaux.

**13.** Boue de forage selon les revendications 11 et 12, caractérisée en ce qu'elles renferment comme additif protégeant la rhéologie de la boue de forage, des aminocomposés basiques à caractère oléophile, aliphatiques, cycloaliphatiques et/ou hétérocycliques, le cas échéant, à insaturation oléfinique, qui présentent un ou plusieurs groupes N aptes à la salification avec des acides carboxyliques.

**14.** Boue de forage selon les revendications 11 à 13, caractérisée en ce qu'elle renferme des aminocomposés basiques, présentant une solubilité dans l'eau à température ambiante, de l'ordre de 5 % en poids au maximum, de préférence inférieure à 1 % en poids.

**15.** Boue de forage selon les revendications 11 à 14, caractérisée en ce qu'elle renferme comme additif protégeant la rhéologie, des amines primaires, secondaires et/ou tertiaires largement insolubles dans l'eau, qui peuvent également être alcoxylées de manière limitée et/ou être substituées, en particulier, par des groupes hydroxyle, des aminoamides correspondants et/ou des hétérocycles renfermant N comme constituant du cycle.

**16.** Boue de forage selon les revendications 11 à 15, caractérisée en ce qu'elle renferme comme additif des aminocomposés basiques, qui présentent au moins un radical hydrocarboné à chaîne longue, comportant de préférence 8 à 36 atomes de C, en particulier 10 à 24 atomes de C, ces radicaux pouvant également être à insaturation oléfinique simple et/ou multiple.

17

**17.** Boue de forage selon les revendications 11 à 16, caractérisée en ce que les aminocomposés basiques oléophiles sont présents dans la boue de forage en proportions allant jusqu'à 10 lb/bbl, de préférence ne dépassant pas 5 lb/bbl.

**18.** Boue de forage selon les revendications 11 à 17, caractérisée en ce que la phase huile-ester renferme des esters à base d'acides carboxyliques monofonctionnels comportant 12 à 24 atomes de C.

**19.** Additif pour l'amélioration et, en particulier, pour la protection contre le vieillissement des propriétés d'écoulement des boues de forage E/H inversées, à base d'une phase huileuse fermée renfermant des huiles-esters d'acides carboxyliques monofonctionnels comportant 6 à 24 atomes de C et d'alcools monofonctionnels, qui contiennent, conjointement, avec la phase aqueuse dispersée, des émulsifiants, des promoteurs de viscosité, des agents alourdissants, des additifs "fluid-loss" et, le cas échéant, d'autres additifs usuels, caractérisé en ce qu'il renferme les aminocomposés basiques et aptes à la salification avec des acides carboxyliques, à caractère oléophile prononcé et à solubilité dans l'eau limitée en conséquence, sous forme dissoute, dans un solvant miscible avec la phase huileuse, de préférence à base d'huiles non polluantes, en particulier, à base d'huile-ester.